# EUROPEAN PATENT APPLICATION

(11) **EP 2 469 943 A1**
(43) Date of publication of application: **27.06.2012**
(21) Application number: 10810020.7
(22) Date of filing: 20.08.2010
(51) Int. Cl.: H04W 56/00, H04L 7/10

(54) **TRANSMISSION FRAME GENERATION DEVICE, WIRELESS DEVICE, BASE STATION, AND TRANSMISSION FRAME GENERATION METHOD**

(30) Priority: 20.08.2009 JP 2009190592; 13.08.2010 JP 2010181187
(71) Applicant: JVC Kenwood Corporation, Yokohama-shi, Kanagawa 221-0022 (JP)
(72) Inventor: TAKEI, Hisashi, Kanagawa 2210022 (JP)
(74) Representative: Carstens, Dirk Wilhelm
(86) International application number: PCT/JP2010/064047
(87) International publication number: WO 2011/021679

(57) **Abstract**

A transmission frame generating device includes an encoding processor 210 encoding upper-layer information to be transmitted by a given encoding procedure to generate a bit string of transmission data, a frame generator 211 adding a synchronous word to the bit string of transmission data to generate a transmission frame by, a synchronous upper-layer information storage unit 213 storing synchronous upper-layer information that allows a synchronous bit string, which is to be used together with the synchronous word for establishing synchronization, to be generated in the bit string 21 of transmission data encoded and generated by the encoding procedure and an upper-layer data processor employing the synchronous upper-layer information as the upper-layer information.

## Description

### Technical Field

The present invention relates to a transmission frame generating device for generating a frame to be transmitted, a wireless device equipped with the transmission frame generating device, a base station and a transmission frame generating method.

### Background Art

There is known a trunking method where a base station for relaying a communication between a part of terminal stations allocates available communication channels dynamically. The base station includes at least one exclusive control channel and a plurality of communication channels. One terminal station transmits a call for the other terminal station to the base station at an upward control channel. Then, the base station receiving the call informs both the terminal stations of an available communication channel at a downward control channel.

In order to allow the terminal stations to certainly synchronize the downward control channel more quickly to effect the shifting to the communication channel, Patent Document No. 1 discloses a method of providing, at the end of a frame, a post-frame for establishing synchronization with a synchronous frame at the head of the communication frame.

### Prior Art Documents

### Patent Documents

Patent Document No. 1: Japanese Patent Publication Laid-open No.2006-101382

### Summary of the Invention

### Problems to be Solved

Due to the necessity of control channels exclusive to call the terminal stations or make a response, the trunking method has a problem of a reduced number of channels usable for communications by just that much. Meanwhile, there also exists a method of dynamically assigning a control channel out of all communication channels. However, when a communication channel is used as a control channel, the frame structure should be changed depending on the presence of a post-frame, thus requiring a different frame generating method.

Taking such a problem into consideration, an object of the present invention is to provide a transmission frame generating device capable of coping with a communication between different frame structures with use of an identical encoding procedure, a wireless device, a base station and a transmission frame generating method.

### Solution to the Problems

In order to solve the above-mentioned prior art problem, the present invention provides a transmission frame generating device comprising: an encoding processor configured to encode upper-layer information to be transmitted by a given encoding procedure thereby generating a bit string of transmission data; a frame generator configured to add a synchronous word to the bit string of transmission data thereby generating a transmission frame; a synchronous upper-layer information storage unit configured to store synchronous upper-layer information that allows a synchronous bit string, which is to be used together with the synchronous word for establishing synchronization, to be generated in the bit string of transmission data encoded and generated by the encoding procedure; and an upper-layer data processor configured to employ the synchronous upper-layer information as the upper-layer information.

In the present invention, the synchronous word may be positioned at a head of the transmission frame, and the synchronous bit string may be positioned at a tail end of the transmission frame.

In addition, the present invention may provide a wireless device including a transmitter configured to transmit the transmission frame.

Still further, the present invention may provide a base station including the wireless device and relaying a wireless communication between at least two terminal stations.

In the base station of the present invention, a predetermined case may correspond to a case when the base station transmits communication channel assignment information for assigning an available communication channel to each of the terminal stations in response to a fact that the base station has received communication request information requiring for one terminal station to communicate with the other terminal station.

In order to solve the above-mentioned prior art problem, additionally, the present invention also provides a transmission frame generating method comprising the steps of: encoding upper-layer information to be transmitted by a given encoding procedure thereby generating a bit string of transmission data, adding a synchronous word to the bit string of transmission data thereby generating a transmission frame, and employing, as the upper-layer information, synchronous upper-layer information that allows a synchronous bit string, which is to be used together with the synchronous word for establishing synchronization, to be generated in the bit string of transmission data encoded and generated by the encoding procedure.

### Effect of the Invention

According to the present invention, it is possible to cope with a communication between different frame structures with an identical encoding procedure without switching the frame structures.

### Brief Description of the Drawings

[Fig. 1] Fig. 1(A) and (B) is a block diagram showing the wireless communication systems in accordance with an embodiment of the present invention.
[Fig. 2] Fig. 2 is a block diagram of a base station in accordance with the embodiment of the present invention.
[Fig. 3] Fig. 3 is a block diagram showing a relay unit of the base station related to the embodiment.
[Fig. 4] Fig. 4 is a block diagram showing a signal processor of the relay unit related to the embodiment.
[Fig. 5] Fig. 5 is a block diagram showing a terminal station in accordance with the embodiment of the present invention.
[Fig. 6] Fig. 6 (A) to (C) is a diagram showing respective structures of wireless frames transmitted and received by the systems of Fig. 1(A) and (B).
[Fig. 7] Fig. 7 (A) to (D) is a diagram showing the frame structure of Fig. 6(A) more concretely.
[Fig. 8] Fig. 8 (A) to (D) is a diagram showing the process of constituting a slow associated control channel from a first control field of the frame of Fig. 6 (A).
[Fig. 9] Fig. 9 is a view showing an example of procedure of generating data of a second control field by encoding upper-layer information in the communication systems of Fig. 1 (A) and (B).
[Fig. 10] Fig. 10 (A) to (H) is a diagram showing the encoding procedure of Fig. 9 more concretely.
[Fig. 11] Fig. 11 is a diagram showing a state transition of the wireless communication system in accordance with the embodiment of the present invention.

### Embodiments of the Invention

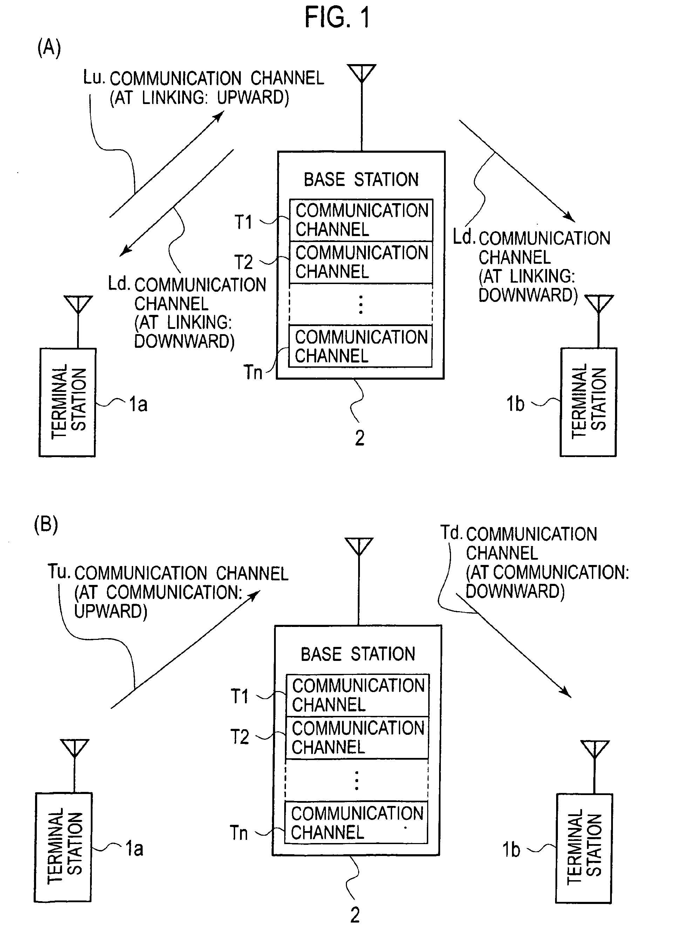

In Fig. 1 (A) and (B), there is schematically illustrated a communication system using a base station in accordance with an embodiment of the present invention. The communication system shown in Fig. 1 (A) and (B) comprises the base station 2 and at least two terminal stations 1a, 1b. An unspecified terminal station will be referred to as "terminal station 1", hereinafter.

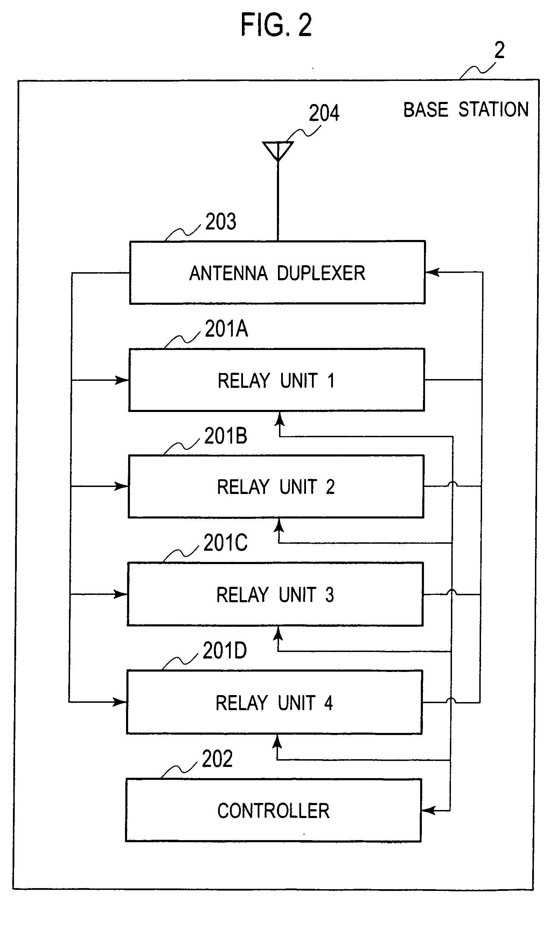

Fig. 2 is a block diagram showing the base station of the embodiment of the present invention. The base station 2 includes a plurality of relay units 201 (201A to 201D), an antenna 204 which transmits and receives signals to and from the terminal stations, an antenna duplexer 203 for allowing the relay units 201 to share the antenna 204 and a controller 202 for controlling the operation of the relay units 201. The antenna duplexer 203 branches a received signal to the multiple relay units 201 and also mixes transmission signals from the multiple relay units 201 for outputting to the antenna 204.

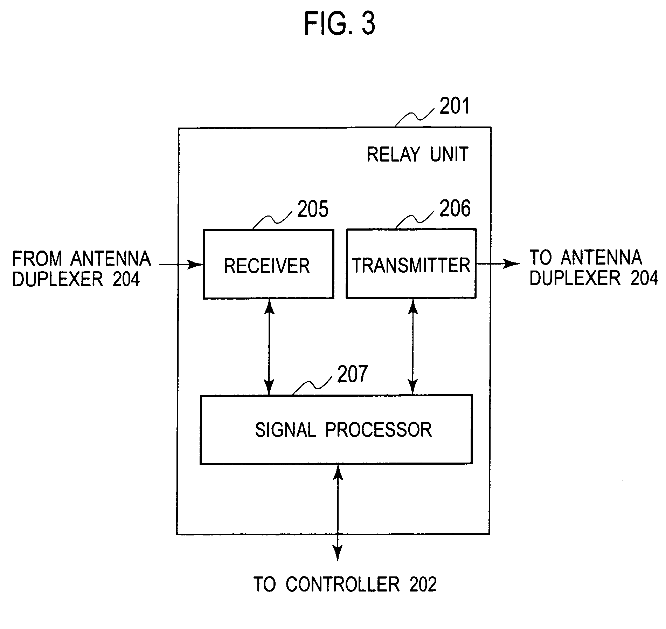

Fig. 3 is a block diagram showing the relay unit 201 of the base station 2. The relay unit 201 includes a receiver 205, a transmitter 206 and a signal processor 207. The receiver 205 removes an interfering wave from a signal received through the antenna duplexer 203, amplifies the resulting signal upon the removal of the interfering wave, detects the amplified signal, decodes it to a data signal and outputs the decoded data signal to the signal processor 207. Then, the transmitter 206 modulates and successively amplifies the data signal generated in the signal processor 207 and generates a transmission signal upon restriction of unnecessary radiation. The generated transmission signal is transmitted from the antenna 204 through the antenna duplexer 203. The signal processor 207 applies a predetermined processing on the data signal decoded by the receiver 205 and also generates the transmission data to outputs it to the transmitter 206.

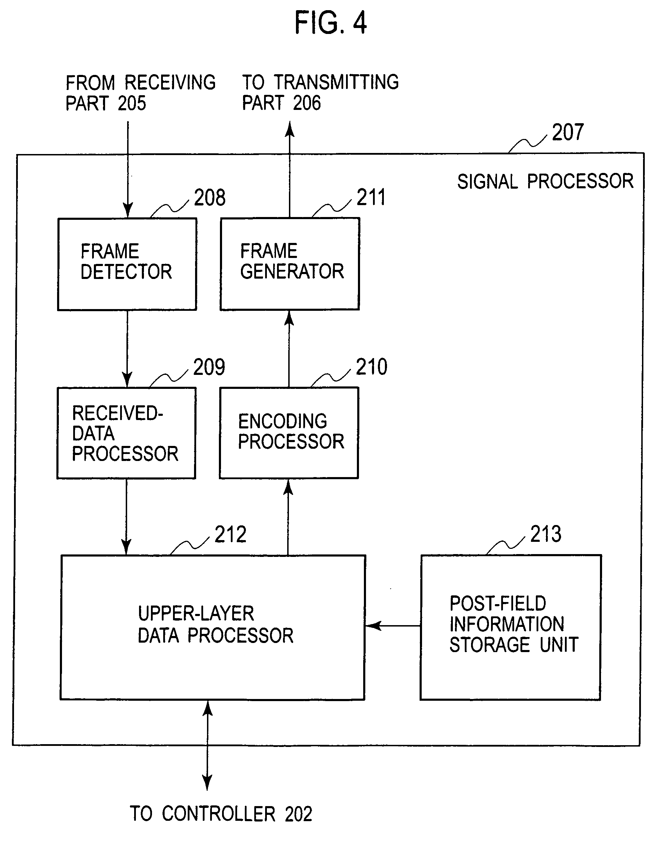

Fig. 4 is a block diagram showing the signal processor 207. The signal processor 207 includes a frame detector 208, a received-data processor 209, an upper-layer data processor 212, an encoding processor 210, a frame generator 211 and a post-field information storage unit 213.

The frame detecting part 208 detects frames of the received signals. The received-data processor 209 extracts received data out of respective received frames. The upper-layer data processor 212 analyzes the received data, generates upper-layer data for transmission, which will be described in detail below, and outputs the upper-layer data for transmission to the encoding processor 210. The generated upper-layer data for transmission has a wide variety of contents depending on the contents of the transmission frames described later. In the upper-layer data for transmission, there are arranged data obtained as a result of analyzing the received data, data defined by the command from the controller and data from the post-field information storage unit 213.

The encoding processor 210 executes error-correcting processing to the inputted upper-layer data for transmission to generate a bit string to be disposed in the transmission frame. Then, the frame generator 211 arranges the bit string generated by the encoding processor 210 in a predetermined frame and adds a FSW (Frame Sync Word) field having a synchronous word arranged therein to the predetermined frame to output it to the transmitter 206.

The post-field information storage unit 213 stores synchronous upper-layer information for allowing a later-mentioned post field 21 to appear in a specified frame. When it is required to allow the post field 21 to appear in a specified frame, the upper-layer data processor 212 reads the synchronous upper-layer information stored in the post-field information storage unit 213 to establish the same information as upper-layer data and outputs it to the encoding processor 210.

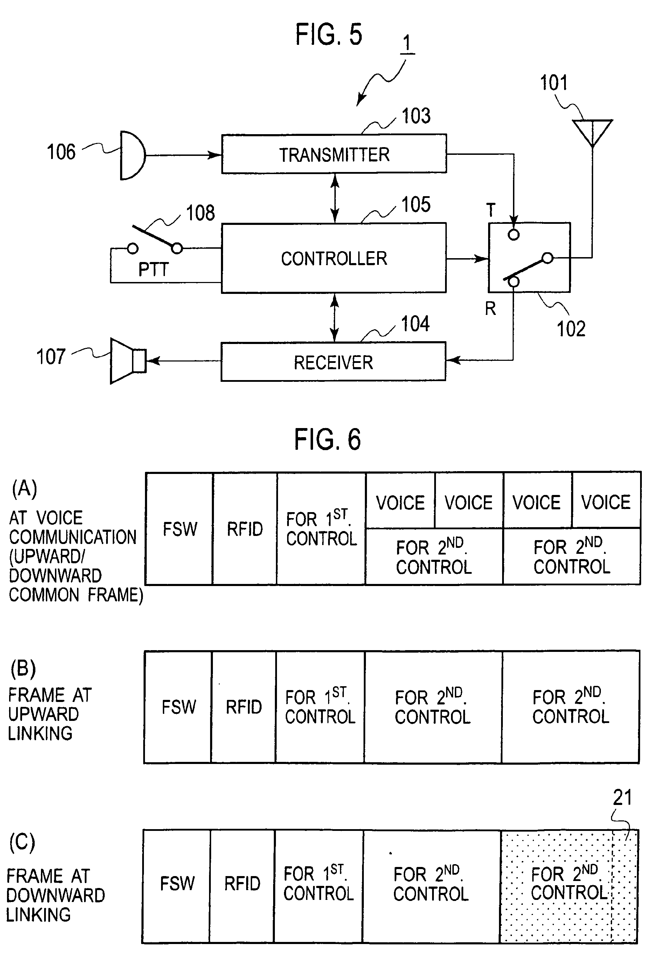

Fig. 5 is a block diagram showing the terminal station 1 communicating with the base station of the embodiment of the present invention. The terminal station 1 includes an antenna 101, an antenna changer 102, a transmitter 103, a receiver 104, a controller 105, a microphone 106, a loudspeaker 107 and a PTT (Push To Talk) switch.

When it is required to make a transmission by manipulating the PTT switch 108, the controller 105 power-activates the transmitter 103 to establish a transmission channel and also switches the position of the antenna changer 102 to a T-position, executing a transmission control to output a transmission output of the transmitter 103 to the antenna 101. While, when the PTT switch 108 is not operated, the controller 105 switches the position of the antenna changer 102 to a R-position to input the received signal from the antenna 101 to the receiver 104 and also allows the receiver 104 to be powered on, executing a reception control to establish a reception channel. In addition, when executing a reception through the downward link communication channel Ld after a later-mentioned transmission through the upward link communication channel Lu, the controller 105 will execute the reception control even if required to make a transmission with a manipulation of the PTT switch 108.

The microphone 106 converts voices by a user of the terminal station 1 into a voice signal. At the time of transmission, the transmitter 103 modulates the voice signal converted by the microphone 106, amplifies the modulated signal and converts it to a transmission signal upon restriction of unnecessary radiation. The receiver 104 removes an interfering wave from a received signal inputted from the antenna 101, amplifies the received signal upon the removal of the interfering wave, decodes the same signal and outputs the decoded signal to the loudspeaker 107. Although a preset default channel is established in the terminal station 1 normally, a channel is dynamically set with information transmitted from the base station 2.

The operation at the communication of an embodiment of the present invention will be described with reference to Fig. 1 (A) and (B). As shown in Fig. 1 (A) and (B), this communication system is interposed between the multiple terminal stations 1 (1a, 1b, ...) communicating with each other and among respective terminal stations 1 and includes the base station 2 dynamically providing communication channels used in the communication among the respective terminal stations owing to trunking control. The base station 2 has a function of relaying the communication between the respective terminal stations 1 by a plurality of communication channels T1, T2, ..., Tn.

Each terminal station 1 stores a default channel fixedly established out of the communication channels T1 to Tn. When starting communications, each terminal station 1 transmits communication request information representing the effect of requesting the start of communications to the base station 2 through the default channel. The communication request information contains ID information for specifying the terminal station 1 as a mate to be communicated. A communication channel in transmitting this communication request information is represented by an "at-linking/upward" communication channel Lu in Fig. 1 (A). Note that the terminology "upward" means one direction extending from each terminal station 1 to the base station 2. Conversely, the terminology "downward" means another direction extending from the base station 2 to each terminal station 1.

On receipt of this communication request information, the base station 2 transmits channel assignment information representing the effect of assigning a communication channel performing communication to the terminal station 1 that has transmitted the communication request information. A communication channel in transmitting this channel assignment information is represented by an "at-linking/downward" communication channel Ld in Fig. 1 (A).

On receipt of this channel assignment information, the terminal station 1 on the mate's side recognizes itself in a called situation and starts receiving. Consequently, there is established a link between the terminal stations 1 in communication with each other, so that the terminal station 1 transmitting the communication request information can start voice communication with the mating terminal station 1.

This link motion is shown with Fig. 1 (A) concretely. Assume that in this embodiment the default channel for the terminal station 1b and the terminal station 1b is the communications channel T1 which is not used by the other terminal stations.

When the terminal station 1a is going to start voice communication, it transmits communication request information containing the ID information of the terminal station 1b to the base station 2 through the "at-linking/upward" communication channel Lu at the communication channel T1. In response to this information, the base station 2 transmits the channel assignment information at the communication channel T1 to the terminal station 1a and the terminal station 1b through the "at-linking/downward" communication channel Ld. On receipt of this information, the terminal station 1b recognizes itself being called.

Consequently, there is established a link between the terminal station 1a and the terminal station 1b, so that the terminal station 1a can start voice communication with the terminal station 1b through an "at-communicating/upward" communication channel Tu and an "at-communicating/downward" communication channel Td, as shown in Fig. 1(B).

In Fig. 6, (A), (B) and (C) show the constitutions of wireless frames transmitted and received by the communication system of Fig. 1. Fig. 6 (A) shows the constitution of a frame in common with upward and downward communications at voice communicating, Fig. 6 (B) shows the constitution of an upward frame at linking, and Fig. 6 (C) shows the constitution of a downward frame at linking. The frame of Fig. 6 (A) comprises respective fields of "FSW", "Radio Frequency Identification", "for the first control" and either "for the second control" or "voice", in order from the front.

In the FSW field, a synchronous word is stored to establish a frame synchronization. Suppose that in this embodiment the synchronous word is formed by a constant bit pattern of 20 bits.

The RFID field stores information for identifying respective frames. The first control field, the second control field and the voice field constitute a function channel. The function channel means a logical channel provided in a physical channel.

The first control field constitutes a slow associated control channel where respective first control fields in successive four frames constitute information corresponding to single upper-layer information.

In the frame of Fig. 6 (A), two second control fields and four voice fields are employed alternatively. The frames of Fig. 6 (B) and (C) are similar to the frame of Fig. 6 (A) in terms of its constitution, except for a nonexistent voice field. In the frame of Fig. 6 (C), however, the tail end of a later second control field functions as a post-field 21 for storing a synchronous bit string.

The synchronous bit string is used to establish a frame synchronization as a result of combining with a synchronous word in the "FSW" field. Assume that in this embodiment the synchronous bit string is a constant bit pattern of 18 bits.

In respective frames of Fig. 6 (A) to (C), the contents of respective second control fields are produced from respective corresponding upper-layer information with use of the same encoding procedure.

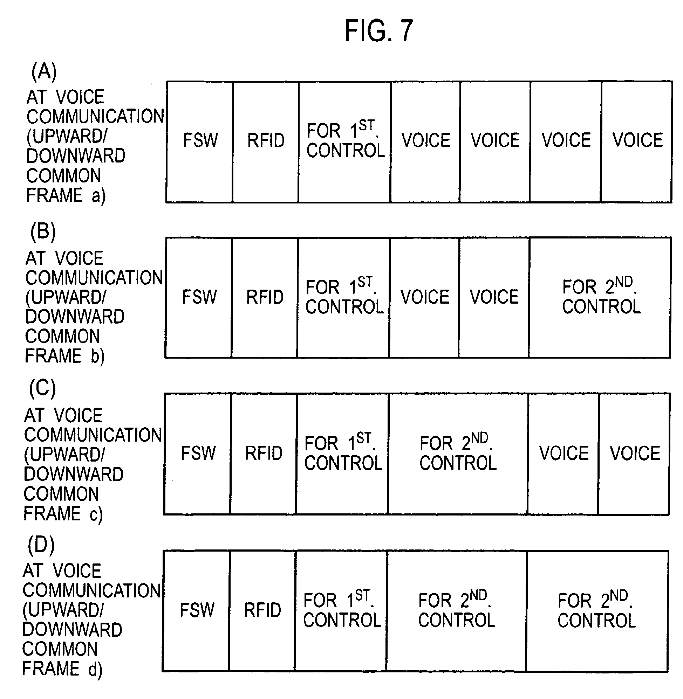

Fig. 7 (A) to (D) is a diagram showing the frame structure of Fig. 6 (A) more concretely. During voice communication, there are possible conditions that: all of four voice fields are used to transmit voice data, as shown with the frame (a) of Fig. 7 (A); later or former two of four voice fields are temporarily used as the second control fields, as shown with frames (b), (c) of Fig. 7 (B) and (C); or all of four voice fields are used as the second control fields, as shown with the frame (d) of Fig. 7 (D). The identification of these frames (a) to (d) is also carried out in accordance with the content of RFID field. Also, the distinction between the upward frame and the downward frame is carried out in accordance with the content of RFID field.

At the communication in the upward direction, there is stored communication request information, voice call information or transmission ending information in the second control field. The communication request information is one for the terminal station 1 to require an assignment of the communication channel for voice communication against the base station 2, in the frame of Fig. 7 (B). On receipt of the communication request information, the base station 2 executes a process of assigning the communication channel in accordance with the content of the communication request information. The voice call information is ID information for identifying the terminal station 1 to be called up on the receiving side. The transmission ending information is one used in terminating a transmission at the communication channel. The transmission ending information is used in the last frame on transmission. By the transmission ending information, the base station 2 can identify that the transmission to the terminal station 1 on the receiving side is about to conclude.

At the communication in the downward direction, there is stored voice call information, channel assignment information or transmission ending information in the second control field. The channel assignment information is one that the base station 2 transmits to the terminal station 1 when assigning the communication channel in response to the receipt of the communication request information from the terminal station 1. When receiving this information, the terminal station 1 starts voice communication on the assigned communication channel. The voice call information and the transmission ending information are similar to the voice call information and the transmission ending information in the upward direction mentioned above, respectively.

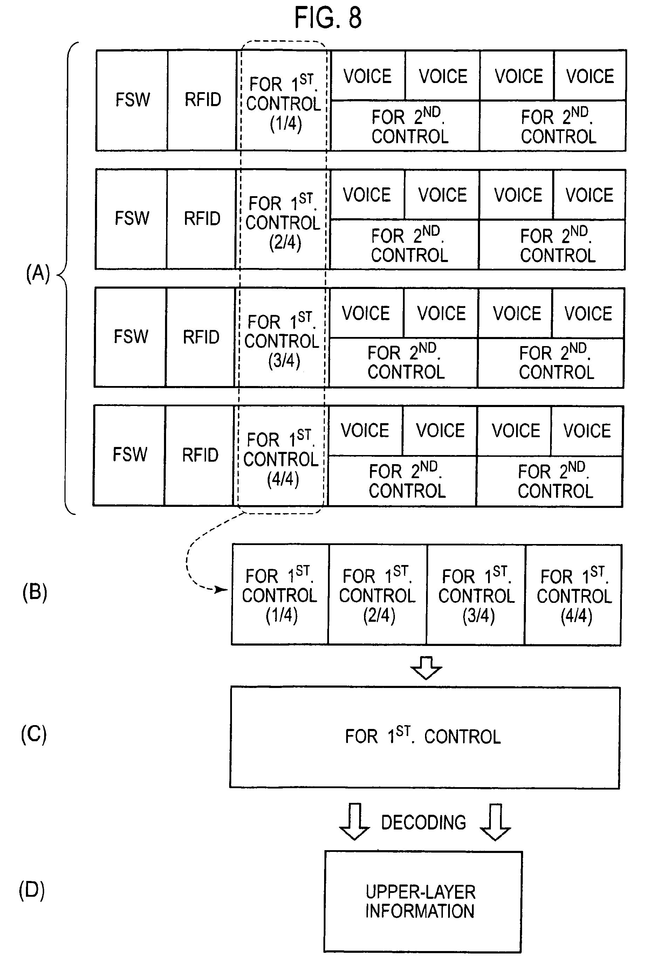

Fig. 8 (A) to (D) illustrates a condition to constitute a slow associated control channel from the first control field. As shown in Fig. 8 (A), single upper-layer information is dispersed to the first control field composed of four consecutive frames apostrophes, that is, first control (1/4) to first control (4/4)". Then, respective data within the frames from first control (1/4) to first control (4/4) are combined with each other, as shown in Fig. 8 (B) and (C). The resultant data is then decoded to obtain the single upper-layer information, as shown in Fig. 8 (D). For example, unused channel information mentioned later and voice call information will fall under the upper-layer information of this first control field.

Even when the terminal station 1 has a default channel in use for voice communication, the terminal station 1 can acquire the unused channel information and the voice call information. The unused channel information is one that the base station 2 uses to inform the terminal station 1 of information about unused channels. When the voice call information stored in the first control field is used during execution of voice communication, both the ID information for identifying the terminal station 1 and the information about a communication channel on use are included in the voice call information. With the use of the first control field, the base station 2 can transmit these information for control as well as the voice communication.

In the frame of Fig. 6 (C), a synchronous bit string of 18 bits is stored in the post field 21 at the trail end of the later second control field. In this synchronous bit string, however, its bit pattern is produced by encoding the upper-layer information in the same method as the encoding procedure in producing the second control fields in the frames of Fig. 1 (A) and Fig. 1 (B). Thus, the processing is simplified by equalizing the encoding procedure at linking to that at the time of communicating.

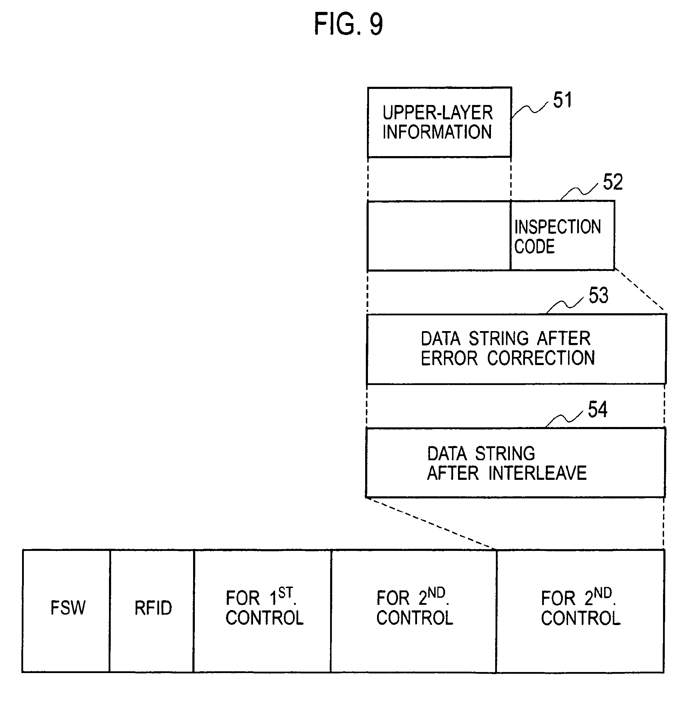

Fig. 9 shows one example of the procedure by which the encoding processor 210 encodes the upper-layer information to generate data in the second control field. In encoding the upper-layer information to the data in the second control field, the encoding processor 210 firstly adds an inspection code 52 to the upper-layer information 51, as shown in Fig. 9. Subsequently, the encoding processor executes an error correction encoding to generate a data string 53 and further applies an interleave processing on the data string. In this way, there is constructed a data string 54 for the second control field.

In this embodiment, through the application of an encoding procedure on synchronous upper-layer information (referred to as "post-field information" after), which would allow the above-mentioned bit pattern of the post field 21 to appear at the tail end of the second control field if only encoding in accordance with this encoding procedure, there is produced data for the later second control field in the communication frame of Fig. 6 (C).

Regarding the post-field information, it may be constructed so as to generate an optional bit string in any area expect for the post field 21, as long as the post-field information allows the above-mentioned synchronous bit string of 18 bits to appear in the post field 21 at the tail end of the second control field. For the "second control field" data comprising a synchronous bit string for the post field 21 and an optional bit string for the other field, therefore, the post-field information can be specified by tracing the encoding procedure of Fig. 5 conversely.

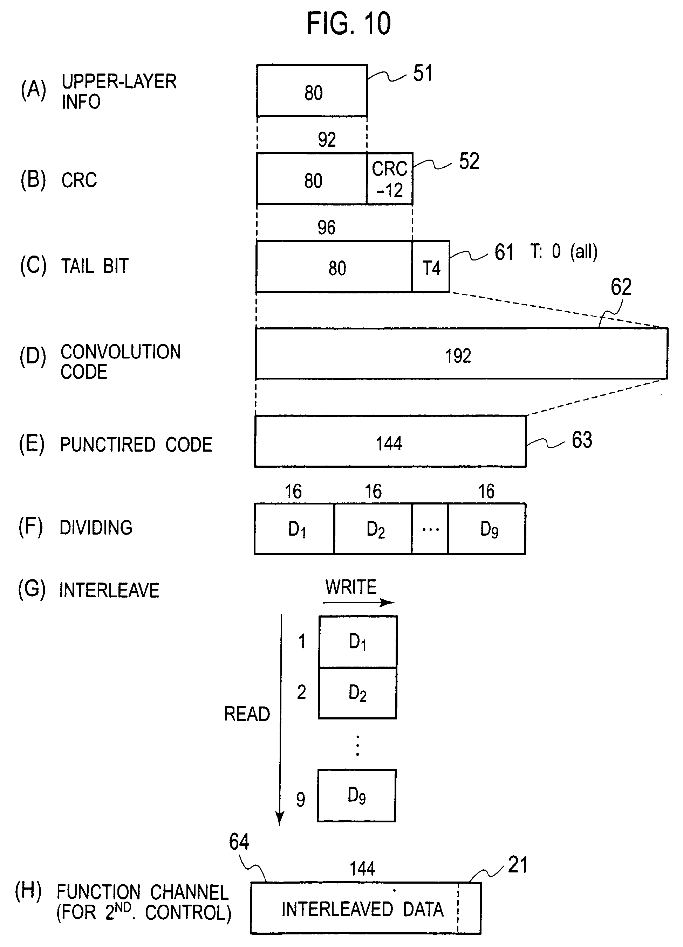

Fig. 10 (A) to (H) shows the encoding procedure of Fig. 9 executed by the encoding processor 210, more concretely. As shown in Fig. 10 (A), it is assumed that the upper-layer information 51 generated from an upper-layer data processor 212 to the encoding processor 210 comprises 80 bits. As shown in Fig. 10 (B), the encoding processor 210 adds CRC-12 as the inspection code 52 to the upper-layer information 51 with use of a predetermined generating polynomial. Next, as shown in Fig. 10 (C), the encoding processor 210 adds a tail bit 61 of 4 bits (value: all 0) for the availability of an error correction mechanism using a convolution code.

Next, the encoding processor 210 executes convolutional encoding to acquire a convolution code 62, as shown in Fig. 10 (D). Note that the convolutional encoding has an encoding ratio of 1/2 and a constraint length of 5. Next, the encoding processor 210 executes a designated puncturing processing to the convolution code 62 to acquire a punctured code 63, as shown in Fig. 10 (E). Next, the encoding processor 210 divides the punctured code 63 into blocks of 16 bits, as shown in Fig. 10 (F). Then, as shown in Fig. 10 (G), the encoding processor 210 reads every block of 16 bits each and further performs an interleaving process with 9 in depth by writing the first bits of respective blocks with respect to each 1 bit. Consequently, the generation of data 64 in the second control field is completed, as shown in Fig. 10 (H).

In this encoding procedure, as the post-field information is employed as the upper-layer information 51 outputted from the upper-layer data processor 212, it is possible to generate the "second control field" data 64 having the post field 21 in which the synchronous bit string is stored.

The post-field information will be obtained as follows. The following process doesn't have to be executed in a communication system in real time. Previously-calculated post-field information, which is expected to be synchronous upper-layer data, is prepared and further stored in the post-field information storage unit 213 in advance. Whenever the post field 21 is required, the system has only to establish the post-field information for data of the upper-layer information 51 in the second control field.

First, as the data 64 in the second control field, it is executed to prepare data including the post field 21 in which the above-mentioned synchronous bit string of 18 bits is established. Next, the reverse operation to the calculations of Fig. 10 (E) to (G) is applied to the data 64 to obtain the convolution code 62. Consequently, it will be found that which of 192 bits of the convolution code 62 corresponds to each bit in the post field 21.

Next, the processing of Fig. 10 (B) to (D) is applied on optional upper-layer information 51. Thus, by varying the bit string of CRC-12 (81^{st}. to 92^{nd}. bit) while making the tail bit 61 all null, it is executed to fmd a candidate for CRC-12 where a bit of the convolution code 62 corresponding to each bit in the post field 21 is satisfactory as a part of the bit string in the post field 21. Then, there are obtained a plurality of candidates.

Next, it is executed to obtain the upper-layer information 51 (1^{st}. to 80^{th}. bits) by a back calculation using one of the so-obtained candidates for CRC-12. For the calculated upper-layer information 51, it is executed to compare a bit string (192 bits) of the convolution code 62, which has been obtained by convolutional-encoding 96 bits composed of a bit string of CRC-12 in one candidate and the tail bits (4 bits), with a bit string (192 bits) of the convolution code, which has been obtained in back calculation from the data 64 in the above-mentioned second control field, with respect to respective bits in the bit-position corresponding to the post field 21 in the bit string. In case of coincidence, it is possible to adopt the upper-layer information 51 resulting from the back calculation as the post-field information. In case of non-coincidence, the similar processing will be performed on a next candidate for CRC-12.

Any of respective "for control" information is one encoded by the identical encoding procedure of Fig. 10 (A) to (H). The processing of trunking control is executed by a controller of the base station 2, in accordance with a predetermined program.

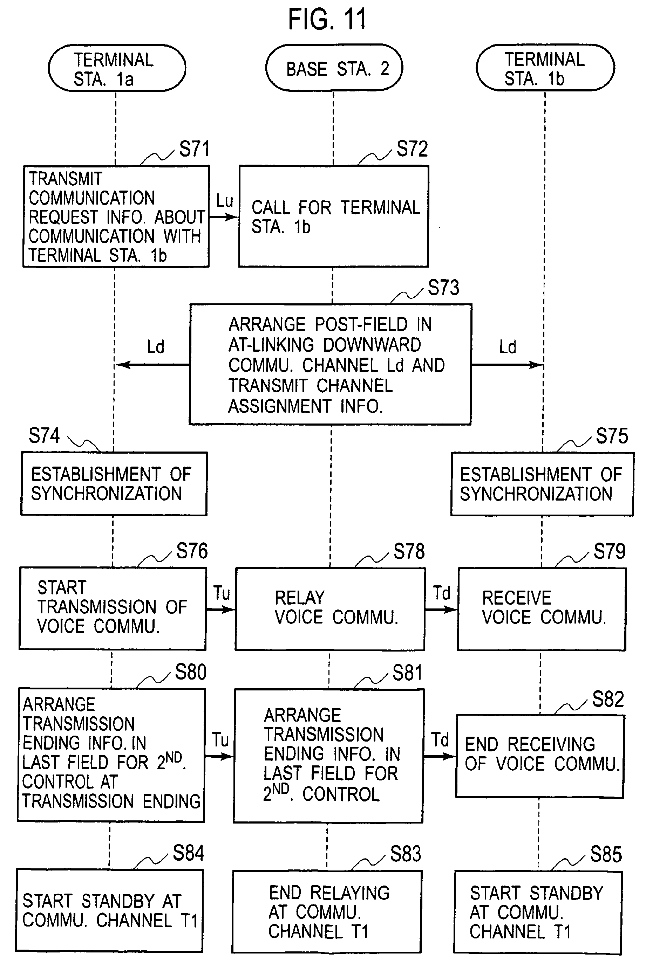

Fig. 11 is a state transition diagram of an embodiment showing the trunking control operation by the base station 2. Assume that both the terminal station 1 a and the terminal station 1b have respective default channels of T1. The terminal station 1a transmits the communication request information containing the ID information about the terminal station 1b through the "at-linking/upward" communication channel Lu (step S71). Then, the base station 2 receives the communication request information and recognizes that it is a call for the terminal station 1b (step S72).

The base station 2 transmits the channel assignment information through the "at-linking/downward" communication channel Ld. Then, the base station 2 arranges the post field 21 at the tail end of the later second control filed (step S73). The above-mentioned post-field information, which has been previously calculated and stored in the post-field information storage unit 213, is employed as the upper-layer data in this second control field. Upon establishment of synchronization with the "at-linking/downward" communication channel Ld, the terminal station 1a and the terminal station 1b receive the channel assignment information (step S74 and step S75).

The terminal station 1a starts the transmission of voice communication via the base station 2 to the terminal station 1b through the "at-communicating/upward" communication channel Tu (step S76). Then, the base station 2 receives voice communication from the terminal station 1a and also starts the relay transmission to the terminal station 1b through the "at-communicating/downward" communication channel Td (S78). The terminal station 1b receives the voice communication from the terminal station 1a via the relay station 2 (step S79).

At the end of transmitting, the terminal station 1a arranges the transmission ending information in the last second control field for transmission (step S80). Similarly, the base station 2 relays the transmission ending information from the terminal station 1a to the terminal station 1b (step S81) and successively ends the relaying operation at the communications channel T1 (step S83). When receiving the transmission ending information from the base station 2, the terminal station 1b ends the receiving of voice communication via the base station 2 from the terminal station 1a (step S82).

The terminal station 1a ends the transmission and starts the standby receiving at the default channel T1 (step S84). The terminal station 1b also starts the standby receiving at the default channel T1 similarly (step S85).

At step S73, the base station 2 stores the channel assignment information in the former second control field in the frame and also stores the post-field information, which has been encoded in the procedure of Fig. 10 (A) to (H), in the later second control field, as shown in Fig. 6 (C). That is, a synchronous bit string is stored in the post field 21 of the later second control field.

The transmission of this frame is continuously performed more than once so that the frame synchronization may be executed at the reception of the terminal station 1 certainly. For this purpose, the terminal station 1 can use a synchronous bit string for the post field 21 in the later second control field and a synchronous word at the head of the next-coming frame in order to establish a frame synchronization.

For instance, if the establishment in synchronization is judged by a single detection of the synchronous word of 20 bits, the possibility of a false synchronization is enhanced. Therefore assume that the synchronization is established in case of detecting the synchronous word in twice successively. In case of 36 bits composed of the synchronous bit string and the synchronous word, however, it is assumed that the synchronization is established by a single detection since the possibility of a false synchronization is reduced relatively. Thus, the detecting of synchronization in case of combining the synchronous bit string with the synchronous word would be effective if the establishment in synchronization is required with fewer times of detection. The possibility of establishing synchronization with a reduced number of times of detecting synchronization is nothing else that the synchronization can be established in a shorter time.

In this embodiment, when transmitting the channel assignment information to the terminal station 1a and the terminal station 1b upon receipt of the communication request information from the terminal station 1a, the base station 2 encodes the post-field information and stores it in the later second control field for transmission. Both the terminal station 1a and the terminal station 1 b can accomplish an establishment of synchronization with the channel assignment information utilizing the synchronous bit string of the post field 21 together with the synchronous word, promptly. Therefore a lapse time until the voice communication is started is shortened.

In this regard, as the procedure of encoding the post-field information is identical to the procedure of encoding other "for control" information transferred from the second control field, there is no need of changing encoding means for the second control field. Thus, it is possible to produce a transmission frame including the post field 21 without changing the structure of a transmission frame.

Generally, with the requirement of high-speed processing, a DSP (Digital Signal Processor) is used for an encoding procedure and therefore, an implementation of multiple encoding procedures would require a device capable of implementing more operations. In case of implementing multiple encoding means, additionally, it takes time to validate the design of implementation.

If no post-field information is required, it is possible to provide the terminal station 1 with other information for trunking control stored in the later second control field. Then, as two kinds of "for control" information is transmitted by a single frame, an effective transmission of "for control" information can be accomplished.

Note that the present invention is not limited to above-mentioned embodiment and can be modified appropriately. For instance, although it is not described above, the processing of scrambling may be applied on encoded data in generating a frame with the encoding procedures of Fig. 9 and Fig. 10. Although there are executed adding of an inspection code, error correcting and interleaving in the encoding procedures of Figs. 9 and 10 in the above-mentioned embodiment, these operations may be eliminated in the modification.

In the foregoing explanation, it is assumed that the default channels of each other's terminal stations 1 are respectively communication channels T1 in common. However, even if the default channels of respective communication mates are different from each other, the start of a call could be ensured since the information about a default channel of the mating station is appended to the communication request information and furthermore, the base station 2 transmits the channel assignment information to respective default channels through the "at-linking/downward" communication channel in making a call.

Although the foregoing explanation is related to the application of the present invention on the trunking system, the present invention is not limited to this, and applicable to a situation to allow a synchronous bit string for acquiring the synchronous word to be generated in a specified bit string in the transmission frame.

### Industrial Applicability

As mentioned above, according to the present invention, it is possible to provide a transmission frame generating device capable of dealing with a communication between different frame structures by the same encoding procedure without changing the frame structures.

### Reference Signs List

- 1a, 1b:: terminal station
- 2:: base station
- 21:: post field
- 51:: upper-layer information
- 52:: inspection code
- 53:: data string
- 54:: data string
- 61:: tail bit
- 62:: convolution code
- 63:: punctured code
- 64:: "second control field" data
- Lu:: "at-linking/upward" communication channel
- Ld:: "at-linking/downward" communication channel
- Tu:: "upward" communication channel
- Td:: "downward" communication channel
- T1, T2,: Tn: communication channel

## Claims

1. A transmission frame generating device comprising:
an encoding processor configured to encode upper-layer information to be transmitted by a given encoding procedure thereby generating a bit string of transmission data;
a frame generator configured to add a synchronous word to the bit string of transmission data thereby generating a transmission frame;
a synchronous upper-layer information storage unit configured to store synchronous upper-layer information that allows a synchronous bit string, which is to be used together with the synchronous word for establishing synchronization, to be generated in the bit string of transmission data encoded and generated by the encoding procedure; and
an upper-layer data processor configured to employ the synchronous upper-layer information as the upper-layer information.

2. The transmission frame generating device of claim 1, wherein
the synchronous word is positioned at a head of the transmission frame, and the synchronous bit string is positioned at a tail end of the transmission frame.

3. A wireless device comprising:
an encoding processor configured to encode upper-layer information to be transmitted by a given encoding procedure thereby generating a bit string of transmission data;
a frame generator configured to add a synchronous word to the bit string of transmission data thereby generating a transmission frame;
a synchronous upper-layer information storage unit configured to store synchronous upper-layer information that allows a synchronous bit string, which is to be used together with the synchronous word for establishing synchronization, to be generated in the bit string of transmission data encoded and generated by the encoding procedure;
an upper-layer data processor configured to employ the synchronous upper-layer information as the upper-layer information; and
a transmitter configured to transmit the transmission frame.

4. A base station for relaying a wireless communication between at least two terminal stations, comprising:
an encoding processor configured to encode upper-layer information to be transmitted by a given encoding procedure thereby generating a bit string of transmission data;
a frame generator configured to add a synchronous word to the bit string of transmission data thereby generating a transmission frame;
a synchronous upper-layer information storage unit configured to store synchronous upper-layer information that allows a synchronous bit string, which is to be used together with the synchronous word for establishing synchronization, to be generated in the bit string of transmission data encoded and generated by the encoding procedure;
an upper-layer data processor configured to employ the synchronous upper-layer information as the upper-layer information; and
a transmitter configured to transmit the transmission frame.

5. The base station of claim 4, wherein
the upper-layer data processor employs the synchronous upper-layer information as the upper layer information when the base station transmits communication channel assignment information for assigning an available communication channel to each of the terminal stations in response to a fact that the base station has received communication request information requiring for one terminal station to communicate with the other terminal station.

6. A transmission frame generating method comprising the steps of:
encoding upper-layer information to be transmitted by a given encoding procedure thereby generating a bit string of transmission data;
adding a synchronous word to the bit string of transmission data thereby generating a transmission frame; and
employing, as the upper-layer information, synchronous upper-layer information that allows a synchronous bit string, which is to be used together with the synchronous word for establishing synchronization, to be generated in the bit string of transmission data encoded and generated by the encoding procedure.

7. The transmission frame generating method of claim 6, wherein
the synchronous word is positioned at a head of the transmission frame, and the synchronous bit string is positioned at a tail end of the transmission frame.
